# EUROPÄISCHE PATENTSCHRIFT

(11) **EP 1 927 868 B1**
(45) Veröffentlichungstag und Bekanntmachung des Hinweises auf die Patenterteilung: **19.12.2012**
(21) Anmeldenummer: 07017956.9
(22) Anmeldetag: 13.09.2007
(51) Int. Cl.: G01V 8/10

(54) **Opto-elektrischer Sensor**
Opto-electronic sensor
Capteur optoélectrique

(30) Priorität: 29.11.2006 DE 102006056648
(43) Veröffentlichungstag der Anmeldung: 04.06.2008
(73) Patentinhaber: SICK AG, 79183 Waldkirch (DE)
(72) Erfinder: Hippenmeyer, Heinrich, 79348 Freiamt (DE); Zwölfer, Ulrich, 79341 Kenzingen (DE); Schmitz, Stephan, Dr., 79108 Freiburg (DE)
(74) Vertreter: Modrow, Stephanie

(56) Entgegenhaltungen:
- EP-A- 0 875 873
- DE-A1- 19 907 546
- DE-A1- 19 907 548

## Beschreibung

Die Erfindung betrifft einen opto-elektronischen Sensor gemäß dem Oberbegriff des Patentanspruchs 1.

Bekannt sind opto-elektronische Sensoren mit wenigstens einem Lichtsender und wenigstens einem Lichtempfänger mit einem Empfangselement, insbesondere als Lichtschranken oder Lichtgitter zur Überwachung, ob unzulässigerweise Gegenstände oder Personen in einen Überwachungsbereich eingedrungen sind. Dazu sendet der Lichtsender ein Strahlenbündel aus, welches auf den Lichtempfänger trifft ist. Trifft das Strahlenbündel auf einen Gegenstand oder eine Person im Überwachungsbereich, wird der Strahlengang zwischen Lichtsender und Lichtempfänger unterbrochen und der Lichtempfänger erzeugt ein Warnsignal. Notwendig ist dabei, dass das vom Lichtsender ausgesandte Strahlenbündel vollständig auf den Lichtempfänger auftrifft und von diesem erfasst wird. Um von einer exakten Ausrichtung zwischen Lichtsender und Lichtempfänger unabhängig zu sein, ist das Empfangselement des Lichtempfängers deutlich größer als der Querschnitt des Strahlenbündels ausgebildet, um auch Fehljustierungen und Toleranzen ausgleichen zu können und auch bei nicht exakter Ausrichtung des ausgesandten Strahlenbündels auf den Lichtempfänger das Strahlenbündel vollständig detektieren zu können. Große Empfangselemente sind jedoch mit hohen Kosten verbunden. Weiterhin ist die Ausrichtung zwischen Lichtsender und Lichtempfänger manuell durchzuführen, was oft einen hohen Zeitaufwand bedeutet und trotzdem eine exakte Ausrichtung erschwert.

Weiterhin bekannt sind ortsauflösende Empfangselemente, mit Hilfe derer die Position des Lichtflecks des einfallenden Strahlenbündels auf dem Empfangselement bestimmt werden kann. Variationen der Position des Lichtflecks auf dem Empfangselement können festgestellt werden, z.B. um Reflexionen an außerhalb des Überwachungsbereichs befindlichen Gegenständen erkennen und unterscheiden zu können. Dazu ist das Empfangselement mit mehreren gleichartigen lichtempfindlichen Elementen, welche beispielsweise in einer Matrixanordnung angeordnet sind, ausgestattet oder als positionssensitiver Detektor (PSD) ausgebildet. Ein Sensor mit einem derartigen ortsauflösenden Empfangselement ist beispielsweise aus der EP 0 875 873 B1 bekannt.

Auch bei diesem Sensor weist das Empfangselement eine große Fläche auf, um das einfallende Strahlenbündel zuverlässig zu empfangen, was mit hohen Kosten verbunden ist.

Die DE 199 07 548 C2 offenbart eine opto-elektronische Vorrichtung, bei welcher das Empfangselement in mehrere Segmente, insbesondere ein zentrales Segment und mehrere äußere, um das zentrale Segment angeordnete Segmente aufgeteilt ist, wobei die äußeren Segmente zur Justage verwendet werden und nach der Justage das gesamte Empfangslicht auf das zentrale Segment des Empfangselements auftrifft. Auch dieser Sensor weist eine große lichtempfindliche Fläche auf, um das einfallende Strahlenbündel zuverlässig detektieren und justieren zu können, wodurch ein hoher Kostenaufwand entsteht.

Die Aufgabe der Erfindung besteht daher darin, einen optoelektronischen Sensor bereitzustellen, welcher einfach zu montieren und kostengünstig herzustellen ist.

Die Aufgabe der Erfindung wird gelöst durch einen opto-elektronischen Sensor mit den kennzeichnenden Merkmalen des Patentanspruchs 1.

Vorteilhafte Ausgestaltungen und Weiterbildungen der Erfindung sind in den Unteransprüchen angegeben.

Das ortsauflösende Empfangselement des Lichtempfängers weist einen inneren Bereich mit wenigstens einem lichtempfindlichen Element zur Detektion des vom Lichtsender ausgesandten Strahlenbündels und einen unmittelbar an diesen angrenzenden äußeren Bereich mit wenigstens einem lichtempfindlichen Element zur Überprüfung der Position des Strahlenbündels auf. Die eigentliche Detektion des Strahlenbündels auf dem Lichtempfänger für die reguläre Funktion des opto-elektronischen Sensors findet somit in dem inneren Bereich des Empfangselements statt, während der äußere Bereich im wesentlichen zur Justierung des opto-elektronischen Sensors während der Montage und/oder zur Kontrolle während des Betriebs dient. Durch die Trennung in den inneren Bereich und den äußeren Bereich wird die Montage und Justage des Lichtsenders und Lichtempfängers deutlich vereinfacht. Die Soll-Position kann einfach bestimmt werden, indem die maximale Intensität des vom Lichtsender ausgesandten Strahlenbündels im inneren Bereich detektiert wird und der äußere Bereich im wesentlichen kein Signal oder nur ein minimales Signal detektiert. Dabei können die von dem inneren und dem äußeren Bereich detektierten Signale zur Ausrichtung herangezogen werden. Erfindungsgemäß genügt der äußere Bereich geringeren Empfindlichkeits- und/oder Bandbreitenanforderungen als der innere Bereich und weist eine geringere Ansprechgeschwindigkeit und/oder eine geringere optische Empfindlichkeit auf als der innere Bereich. Für die Überwachungsfunktion im regulären Betrieb wird z.B. aus Sicherheitsgründen eine große Empfindlichkeit zur Detektion von Intensitätsschwankungen und eine hohe Ansprechgeschwindigkeit bzw. kurze Ansprechzeit zur Detektion von in den Überwachungsbereich gelangenden Gegenständen oder Personen gefordert. Diesen Anforderungen genügt der innere Bereich. Der äußere Bereich wird dagegen im Wesentlichen zur Justage und zu Überprüfungen verwendet. Es besteht keine Notwendigkeit, den äußeren Bereich mit den gleichen leistungsstarken Komponenten wie den inneren Bereich auszustatten. Der äußere Bereich kann somit mit nachfolgenden Verstärkerschaltungen ausgestattet werden, deren Schaltungsaufwand für die Verstärkung der Signale der Randbereiche niedrig gehalten werden kann, welche jedoch den Anforderungen für die Justierung bei der Montage und die Kontrolle der Position des auf den Lichtempfänger einfallenden Strahlenbündels während des Betriebs genügen. Dadurch werden die Herstellungskosten für den Sensor deutlich gesenkt.

Vorzugsweise wird der innere Bereich aus genau einem lichtempfindlichen Element und der äußere Bereich aus mehreren, um den inneren Bereich angeordneten lichtempfindlichen Elementen gebildet ist. Ein lichtempfindliches Element reicht, falls das vom Lichtsender ausgesandte Strahlenbündel exakt auf dieses lichtempfindliche Element fokussiert ist, zur Detektion des Strahlenbündels aus. Nur dieses eine lichtempfindliche Element wird, mit den hohen Anforderungen an Empfindlichkeit und Bandbreite verschaltet und betrieben, wodurch die Herstellungskosten weiter gesenkt werden.

Vorteilhafterweise ist der Durchmesser des äußeren Bereichs um weniger als 20% des Durchmessers des inneren Bereichs größer als der Durchmesser des inneren Bereichs. Der äußere Bereich ist somit besonders schmal ausgebildet, wodurch sich die Fläche des Empfangselement verkleinert, so dass weiterhin Material- und Herstellungskosten eingespart werden können. Ein derart schmaler äußerer Bereich ist jedoch ausreichend, um bei der Justage oder bei Überprüfungen feststellen zu können, ob der Lichtstrahl bereits seine Soll-Position erreicht hat oder ob eine Abweichung von der Soll-Position vorliegt.

Vorteilhafterweise ist der Durchmesser des inneren Bereichs um soviel größer als der Durchmesser des Lichtflecks des auf das Empfangselement einfallenden Strahlenbündels, dass bei einer Verschwenkung des Lichtsenders um maximal +/- 2,5° gegen seine optische Achse der Lichtfleck des auf das Empfangselement einfallenden Strahlenbündels noch vollständig auf den inneren Bereiche abgebildet wird. Der Durchmesser des Lichtflecks wird dabei durch den fokussierten Strahl ohne Streustrahlung bestimmt. Bei der Wahl der Größe des Empfangselements bzw. des inneren Bereichs soll einerseits gewährleistet werden, dass der Lichtfleck zuverlässig auch bei Verschiebungen detektiert werden kann, wozu der innere Bereich möglichst groß gewählt wird. Andererseits steigen die Materialkosten beträchtlich, je größer der innere Bereich ausgebildet ist. Die wie zuvor beschriebene Dimensionierung des Durchmessers des inneren Bereichs gewährleistet, dass bei Verschiebungen innerhalb von Fehlertoleranzen der Lichtfleck zuverlässig durch den inneren Bereich detektiert wird, wobei jedoch die Größe des inneren Bereichs so klein wie möglich gehalten wird, um die Materialkosten so gering wie möglich zu halten. Die Winkelangabe von maximal 2,5° für die Verschwenkung des Lichtsenders gegen seine optische Achse spiegelt den ursprünglichen Arbeitsbereich des Sensors wieder. Zudem soll bei dem Empfangselement nur der innere Bereich die eigentliche sicherheitstechnische Sensorik darstellen, während der äußere Bereich lediglich eine Hilfssensorik darstellt so dass gewährleistet sein muss, dass zumindest bei geringen Verschwenkungen des Lichtsenders gegen seine optische Achse eine zuverlässige Detektion mit Hilfe des inneren Bereichs möglich ist und daher in dem ursprünglichen Arbeitsbereich soviel Energie wie möglich auf den inneren Bereich des Empfangselements fällt.

In einer Ausgestaltung der Erfindung ist das ortsauflösende Empfangselement aus einer Matrixanordnung von lichtempfindlichen Elementen gebildet. Dabei wird der innere Bereich von einem oder mehreren lichtempfindlichen Elementen im Innern der Matrix und der äußere Bereich von angrenzenden Elementen gebildet. In einer alternativen vorteilhaften Ausführungsform der Erfindung ist der innere Bereich des ortsauflösenden Empfangselements aus einem kreisscheibenförmigen lichtempfindlichen Element und der äußere Bereich des ortsauflösenden Empfangselements aus um das kreisscheibenförmige lichtempfindliche Element angeordneten kreisringsegmentförmigen lichtempfindlichen Elementen gebildet. Beide Ausführungsformen stellen sicher, dass eine Abweichung der Soll-Position des auf den Lichtempfänger einfallenden Strahlenbündels in beliebiger Richtung von den angrenzenden lichtempfindlichen Elementen detektiert wird.

Bei der zweiten Ausführungsform wird bevorzugt der äußere Bereich durch vier kreisringsegmentförmige lichtempfindliche Elemente in vier Quadranten gebildet, da dies bereits ausreichend ist, Abweichungen der Soll-Position und deren Winkelrichtung zu detektieren. Der Aufwand für die Signalverarbeitung und somit auch die Herstellungskosten bleiben jedoch gering.

Die lichtempfindlichen Elemente des inneren und des äußeren Bereichs können Halbleiterelemente sein, die in einem Array angeordnet sind. Ebenso kann jedoch das Empfangselement insgesamt als positionsempfindlichen Detektor (PSD) aus einem Halbleiterelement, insbesondere Silizium-Element, gebildet sein, sofern die Abmessungen dies ermöglichen.

Vorzugsweise sind die Signale jedes lichtempfindlichen Elementes separat auswertbar, um aus den von den einzelnen lichtempfindlichen Elementen detektierten Signalen die Position und die Richtung der Abweichung des einfallenden Strahlenbündels von der Soll-Position bestimmen zu können. Zur Bestimmung der Position des Strahlenbündels sind vorteilhafterweise Mittel vorgesehen, welche die Verhältnisse der einzelnen von den lichtempfindlichen Elementen erzeugten Signale bildet, um aus den Verhältnissen auf die Richtung der Abweichung des einfallenden Strahlenbündels von der Soll-Position schließen zu können.

Die separate Auswertung der Signale jedes lichtempfindlichen Elements und vorzugsweise die Bildung der Verhältnisse der Signale jedes lichtempfindlichen Elements kann insbesondere bei der Montage des Lichtempfängers zur Justierung des Empfangselements und der Empfangsoptik ausgenutzt werden. Bei einer vorteilhaften Weiterbildung der Erfindung sind dabei Mittel vorgesehen, welche die von den einzelnen lichtempfindlichen Elementen detektierten Signale auswerten und zur Ausrichtung von Empfangsoptik und Empfangselement verwenden. Beispielsweise kann an dem Empfangselement ein oder zwei motorgesteuerte Kippvorrichtungen vorgesehen werden, welche in Abhängigkeit von den detektierten Signalen verfahren werden, um das Empfangselement in einer oder zwei Achsen justieren zu können. Damit wird das Empfangselement in Abhängigkeit von den von den einzelnen lichtempfindlichen Elementen detektierten Signalen automatisch justiert, so dass die manuelle Ausrichtung des Lichtempfängers entfällt, was die Genauigkeit der Ausrichtung weiter erhöht und die Montage deutlich vereinfacht.

Bei einer besonders bevorzugten Ausführungsform der Erfindung sind mehrere Lichtsender und mehrere Lichtempfänger vorgesehen, welche in Lichtgitteranordnung angeordnet sind. Gerade in einer Lichtgitteranordnung bieten die Lichtempfänger mit aus einem inneren und einem äußeren Bereich bestehenden Empfangselementen besondere Vorteile im Hinblick auf die Justierung und Montage der einzelnen Lichtempfänger, da mit ihnen besonders einfach bestimmt werden kann, ob das von einem bestimmten Lichtempfänger empfangene Licht von dem zugeordneten Lichtsender kommt und nicht Streulicht oder Licht eines benachbarten fehljustierten Lichtsenders ist.

Die Erfindung wird anhand der nachfolgenden Figuren ausführlich erläutert. Es zeigt
- Figur 1: eine schematische Darstellung eines Ausführungsbeispiels eines Empfangselements gemäß der Erfindung,
- Figur 2: eine schematische Darstellung eines Ausführungsbeispiels einer Lichtgitteranordnung und
- Figur 3: eine schematische Darstellung eines Ausführungsbeispiels eines opto-elektronischen Sensors.

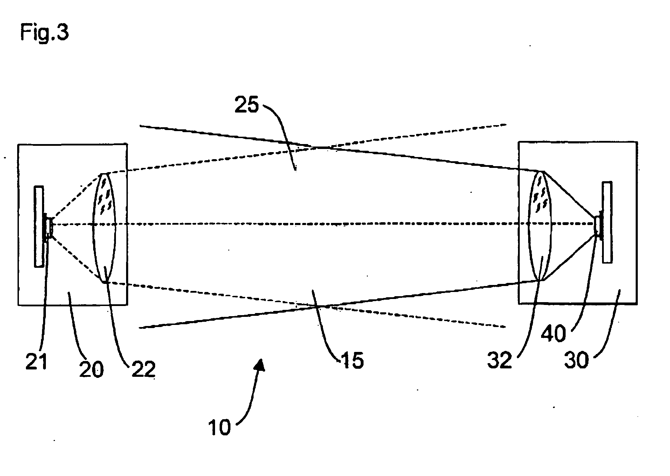

Die Figur 3 zeigt eine opto-elektronische Sensoranordnung 10 mit einem Lichtsender 20 und einem Lichtempfänger 30. Der Lichtsender 20 und der Lichtempfänger 30 sind an einander gegenüberliegenden Seiten eines Überwachungsbereichs 15 angeordnet. In einem nicht dargestellten Ausführungsbeispiel der Erfindung können der Lichtsender 20 und der Lichtempfänger 30 auch auf der gleichen Seite des Überwachungsbereichs 15 angeordnet sein, während auf der gegenüberliegenden Seite ein Reflektor angeordnet ist, der das vom Lichtsender 20 ausgesandte Licht in den Lichtempfänger 30 reflektiert. Der Lichtsender 20 weist eine Leuchtdiode 21 oder eine sonstige Lichtquelle auf, welche ein Strahlenbündel 25 aussendet, welches mittels einer Sendeoptik 22 gebündelt wird. Mittels einer Empfangsoptik 32 wird das von dem Lichtsender 20 ausgesandte Strahlenbündel 25 als Lichtfleck auf ein in dem Lichtempfänger 30 vorzugsweise im Brennpunkt der Empfangsoptik 32 angeordnetes Empfangselement 40 fokussiert.

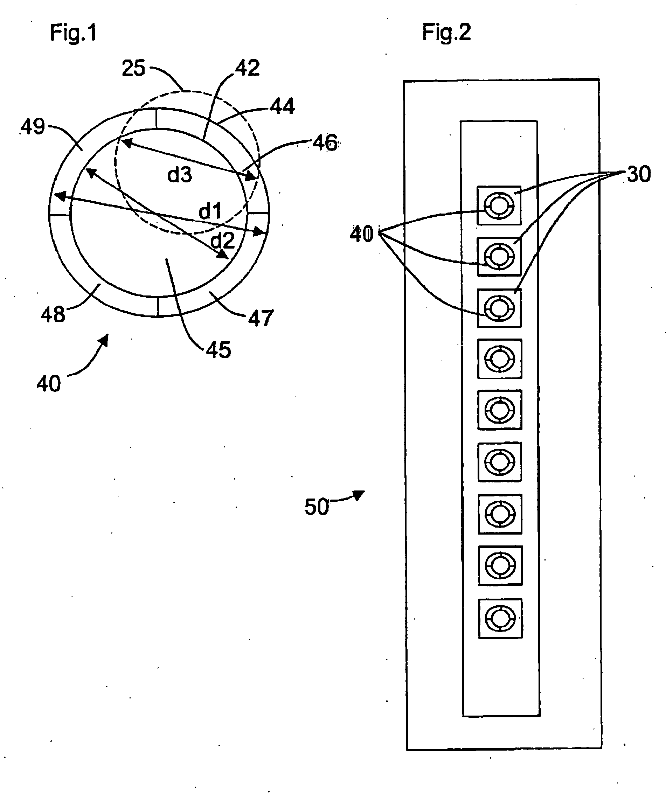

Ein Ausführungsbeispiel des Empfangselements 40 ist in Figur 1 dargestellt. Das Empfangselement 40 weist einen inneren Bereich 42 und einen unmittelbar angrenzenden äußeren Bereich 44 auf, wobei der innere Bereich 42 zur Detektion des von dem Lichtsender 20 ausgesandten Strahlenbündels 25 und der äußere Bereich 44 zur Überprüfung der Position des Lichtflecks des Strahlenbündels 25 auf dem Empfangselement 40 vorgesehen ist. Dazu weisen sowohl der innere Bereich 42 wenigstens ein lichtempfindliches Element 45 als auch der äußere Bereich 44 wenigstens ein lichtempfindliches Element 46, 47, 48, 49 auf, wobei die lichtempfindlichen Elemente 46, 47, 48, 49 des äußeren Bereichs 44 um die lichtempfindlichen Elemente 45 des inneren Bereichs 42 angeordnet sind. Vorzugsweise wird der innere Bereich 42 durch genau ein lichtempfindliches Element 45 gebildet. Bei der in Figur 1 dargestellten bevorzugten Ausführungsform besteht der innere Bereich 42 aus einem kreisscheibenförmigen lichtempfindlichen Element 45, während der äußere Bereich 44 durch vier kreisringsegmentförmige lichtempfindliche Elemente 45 gebildet ist, die sich jeweils über einen Quadranten erstrecken und einen den inneren Bereich 42 umschließenden Kreisring bilden. Beispielsweise sind die lichtempfindlichen Elemente 45, 46, 47, 48, 49 als Si-Photodioden ausgebildet, welche das einfallende Licht detektieren und in Photoströme umwandeln. Die Photodioden können dabei als Array auf einem Si-Chip ausgebildet sein. Es ist auch möglich, das gesamte Empfangselement 40 als positionssensitiven Detektor (PSD) auszubilden und die Elemente 45, 46, 47, 48, 49 über die Kontaktierung des PSD zu unterscheiden. In einer alternativen nicht dargestellten Ausführungsform können die lichtempfindlichen Elemente beispielsweise auch in Form einer Matrix angeordnet sein, bei welcher die lichtempfindlichen Elemente in Zeilen und Spalten angeordnet sind und ein Teil der im Innern der Matrix liegenden lichtempfindlichen Elemente den inneren Bereich und die verbleibenden äußeren lichtempfindlichen Elemente den äußeren Bereich bilden.

Der äußere Bereich 44 weist einen Durchmesser d1 und der innere Bereich 42 einen Durchmesser d2 auf, wobei der Durchmesser d1 des äußeren Bereichs 44 weniger als 20% des Durchmessers d2 des inneren Bereichs 42 größer ist als der Durchmesser d2 des inneren Bereichs 42. Der äußere Bereich 44 ist somit vergleichsweise schmal, was jedoch ausreichend ist, um Abweichungen des Lichtflecks des einfallenden Strahlenbündels 25 von der Soll-Position registrieren zu können.

Der Lichtfleck des Strahlenbündels 25 weist einen Durchmesser d3 auf, wobei der Durchmesser d2 des inneren Bereichs 42 soviel größer ist als der Durchmesser d3 des Lichtflecks des auf das Empfangselement 40 einfallenden Strahlenbündels 25, dass bei einer Verschwenkung des Lichtsenders um maximal 2,5° gegen seine optische Achse der Lichtfleck des auf das Empfangselement 40 einfallenden Strahlenbündels 25 noch vollständig auf den inneren Bereiche 42 abgebildet wird. Dadurch werden Abweichungen von der Soll-Position im Rahmen von Fehlertoleranzen zugelassen, während der innere Bereich 42 doch ausreichend klein ausgebildet ist, um keine unnötigen Material-und Herstellungskosten zu verursachen.

Der innere Bereich 42 mit dem lichtempfindlichen Element 45 dient während des Betriebs der opto-elektronischen Sensoranordnung 10 zur Detektion des von dem Lichtsender 20 ausgesandten Strahlenbündels 25. Die dem Element 45 nachgeschaltete Elektronik, insbesondere die nachgeschaltete Verstärkerschaltung, weist eine hohe Empfindlichkeit und eine große Bandbreite auf, so dass die Signale des lichtempfindlichen Elements 45 mit schneller Anstiegszeit ausgewertet werden können und eine kurze Ansprechzeit für die Überwachung gewährleistet ist. Da aufgrund der nachfolgend beschriebenen Ausrichtung des Empfangselements 40 in Bezug auf den Lichtsender 20 eine exakte Ausrichtung möglich ist, kann der innere Bereich 42 mit dem lichtempfindlichen Element 45 so wie zuvor beschrieben dimensioniert werden, dass sein Durchmesser d2 geringfügig größer ist als der Durchmesser d3 des Lichtflecks des einfallenden Strahlenbündels 25 auf dem Empfangselement 40, um Fehlertoleranzen der Justierung ausgleichen zu können. Es ist jedoch nicht notwendig, den inneren Bereich und somit das im inneren Bereich 42 angeordnete lichtempfindliche Element 45 mit erheblich größerer Fläche auszubilden. Dies führt zu einer Einsparung an kostspieligem Halbleitermaterial.

Die im äußeren Bereich 44 angeordneten lichtempfindlichen Elemente 46, 47, 48, 49 dienen während der Herstellung der opto-elektronischen Sensoranordnung 10 zur Justierung des Lichtempfängers 30. Dazu wird bei der Montage von einem Lichtsender ein Strahlenbündel ausgesendet und durch die Empfangsoptik 32 auf das Empfangselement 40 fokussiert. Zunächst wird noch keine exakte Ausrichtung zwischen der Empfangsoptik 32 und dem Empfangselement 40 des Lichtempfängers 30 vorliegen, so dass der Lichtfleck des Strahlenbündels 25 teils auf den inneren Bereich 42, teils auf den äußeren Bereich 44 auftritt wie beispielsweise in Figur 1 anhand der gestrichelten Linie angedeutet. Jedes der fünf lichtempfindlichen Elemente 45, 46, 47, 48, 49 des Empfangselements 40 kann separat ausgewertet werden. Dabei ergibt sich, dass das im inneren Bereich 42 angeordnete lichtempfindliche Element 45 nur teilweise ausgeleuchtet ist, während das im äußeren Bereich 44 angeordnete lichtempfindliche Element 46 fast vollständig und die angrenzend angeordneten lichtempfindlichen Elemente 47, 49 zu geringen Teilen ausgeleuchtet sind. Daraus und insbesondere aus den aus den von den einzelnen lichtempfindlichen Elementen 45, 46, 47, 48 detektierten Signalen gebildeten Verhältnissen können Rückschlüsse auf die Position des Lichtflecks gezogen werden und die Empfangsoptik 32 und das Empfangselement 40 können entsprechend dieser Abweichung von der Soll-Position justiert werden, bis der innere Bereich 42 mit maximaler Intensität und die Elemente 46, 47, 48, 49 des äußeren Bereichs 44 mit jeweils gleicher minimaler Intensität ausgeleuchtet werden. Insbesondere sind bei Erreichen der Soll-Position die Verhältnisse der Signale der einzelnen lichtempfindlichen Elemente 45, 46, 47, 48 alle gleich. Während das im inneren Bereich 42 angeordnete lichtempfindliche Element 45 den hohen Anforderungen an Empfindlichkeit und Bandbreite bzw. Ansprechzeit genügen muss, können die im äußeren Bereich 44 angeordneten lichtempfindlichen Elemente 46, 47, 48, 49 für die Justage oder auch für in gewissen Zeitabständen während des Betriebs vorgenommenen Überprüfungen mit einer anspruchslosen und damit kostengünstigeren Elektronik verschaltet sein.

Bei einer besonders bevorzugten Ausführungsform der Erfindung sind nicht dargestellte Mittel vorgesehen, welche durch Auswertung der Signale der einzelnen lichtempfindlichen Elemente 45, 46, 47, 48, 49 die gegenseitige Ausrichtung der Empfangsoptik 32 und des Empfangselementes 40 bei der Montage steuern. Die Signale der lichtempfindlichen Elemente 45, 46, 47, 48, 49 werden detektiert; die Empfangsoptik 32 und das Empfangselement 40 werden automatisch in Abhängigkeit von den detektierten Signalen, insbesondere in Abhängigkeit von den aus den Signalen gebildeten Verhältnissen, gegeneinander verfahren, bis der Lichtfleck des Strahlenbündels 25 auf den inneren Bereich 42 des Empfangselements 40 zentriert ist, und dann in dem Lichtempfänger 30 fixiert. Um das Empfangselement 40 verfahren zu können, ist es beispielsweise durch eine Kippvorrichtung in einer oder zwei zueinander senkrecht stehenden Achsen, welche beide senkrecht zur optischen Achse des Empfangselemente 40 stehen, durch einen oder zwei Motoren verkippbar. Dabei wird der Betrag, um welche die Kippvorrichtung gekippt wird, in Abhängigkeit von den detektierten Signalen bestimmt. Auf diese Weise wird die Montage des Lichtempfängers 30 automatisiert und damit wesentlich vereinfacht.

Während des Betriebs, in dem das Strahlenbündel 25 auf den inneren Bereich 42 fokussiert ist, kommt dem äußeren Bereich 44 die Funktion der Überprüfung der Position des Strahlenbündels 25 zu, um eine Dejustierung des opto-elektronischen Sensors zu verhindern. In regelmäßigen Abständen überprüfen die im äußeren Bereich 44 angeordneten lichtempfindlichen Elemente 46, 47, 48, 49, ob sich die detektierten Signale, die der einfallenden Intensität des Strahlenbündels 25 entsprechen, verändern und einen vorgegebenen Schwellenwert überschreiten. Gegebenenfalls können auch die aus den Signalen gebildeten Verhältnisse daraufhin überprüft werden, ob sie übereinstimmen oder voneinander abweichen. In diesem Fall hat sich der Lichtfleck bewegt, leuchtet nun auch in den äußeren Bereich 44 und leuchtet den inneren Bereich 42 nicht mehr vollständig aus. Eine Abnahme der Intensität des Lichtflecks im inneren Bereich 42 kann nicht nur durch eine Dejustierung des Sensors, sondern auch durch eine zunehmende Verschmutzung der Oberfläche des Lichtempfängers verursacht werden, ohne dass sich die Position des Lichtflecks ändert. Durch die zusätzliche Überprüfung mithilfe der im äußeren Bereich 44 angeordneten lichtempfindlichen Elemente 46, 47, 48, 49 kann unterschieden werden, ob der Lichtfleck gewandert ist und eine erneute Justierung des Sensors notwendig ist oder ob nur eine Verschmutzung der Oberfläche des Lichtempfängers 30 vorliegt, die zwar eine Reinigung des Sensors 30, nicht jedoch eine neue Justage erfordert.

Der vorliegend beschriebene Lichtempfänger 30 mit dem Empfangselement 40 kann nicht nur in opto-elektronischen Sensoreanordnungen 10, welche zur Überwachung von Überwachungsbereichen verwendet werden, eingesetzt werden, sondern auch zur Ausrichtung und/oder Positionierung von beliebigen Bauteilen, beispielsweise auf Leiterplatten, zur Anwendung kommen.

In Figur 2 ist eine bevorzugte Ausführungsform der Empfangsvorrichtung eines opto-elektronischen Sensors dargestellt, in welchem nicht nur ein Lichtempfänger 30, sondern mehrere Lichtempfänger 30 und dementsprechend auch (nicht dargestellt) mehrere Lichtsender verwendet werden. Die Lichtsender und Lichtempfänger 30 werden jeweils auf einer Seite des zu überwachenden Bereichs in einer Linie angeordnet und bilden auf diese Weise eine Lichtgitteranordnung 50. Bevorzugt werden die Empfangselemente 40 der Lichtempfänger 30 gemäß dem Ausführungsbeispiel in Figur 1 in derartigen Lichtgitteranordnungen verwendet. Die Schwierigkeit in der Justierung derartiger Lichtgitteranordnungen 50 besteht darin, dass das von einem Lichtsender ausgesandte Licht nicht nur in den zugeordneten Lichtempfänger 30, sondern auch in einen diesem benachbarten angeordneten Lichtempfänger 30 gelangen kann. In der Regel ist es bei Lichtgitteranordnungen 50, welche im Abstand von etwa 10 mm Lichtsender und Lichtempfänger 30 aufweisen, der Fall, dass das von einem Lichtsender ausgestrahlte Licht einen Öffnungswinkel von etwa 2° aufweist und daher in mehrere benachbarte Empfangselemente 30 einstrahlt. Bei optimaler Justierung der Lichtgitteranordnung 50 wird dabei jedoch das von einem Lichtsender ausgesandte Licht nur in dem entsprechenden Lichtempfänger 30 in der Soll-Position detektiert, während es in den benachbarten Lichtempfängern 30 in einer von der Soll-Position abweichenden Position detektiert wird. Die Justierung des von einem Lichtsender ausgesandten Lichts auf den entsprechenden Lichtempfänger wird durch eine zeitliche Steuerung der von den unterschiedlichen Lichtsendern ausgesandten Lichtpulse ermöglicht.

Unter Verwendung der Empfangselemente 40 gemäß dem Ausführungsbeispiel in Figur 1 wird die Justierung besonders einfach, da mithilfe der in den jeweiligen äußeren Bereichen der Empfangselemente 40 angeordneten lichtempfindlichen Elemente zwischen einer Lichteinstrahlung von dem exakt ausgerichteten zugeordneten Lichtsender und sonstigem Lichteinfall unterschieden werden kann. Desweiteren erleichtert auch die Auswertung der von den unterschiedlichen lichtempfindlichen Elementen 45, 46, 47, 48 ausgewerteten Signale die Justierung, da sie ebenfalls eine automatisierte Ausrichtung der Empfangselemente 30 gegenüber der Lichtsender ermöglicht. Um bei beispielsweise 100 Lichtempfängern 30 pro Meter Lichtgitteranordnung den Aufwand für die automatische Ausrichtung möglichst gering zu halten, genügt es in der Regel, nur einen Mechanismus vorzusehen, welcher die gesamte Schiene mit den Lichtempfängern 30 kippt, um sie parallel zur den entsprechenden Schiene mit den Lichtsendern auszurichten, da die optischen Achsen der einzelnen Lichtempfänger 30 in einer Schiene in der Regel zueinander parallel ausgerichtet sind.

### Bezugszeichenliste

- 10: Opto-elektronische Sensoranordnung
- 15: Überwachungsbereich
- 20: Lichtsender
- 21: Leuchtdiode
- 22: Sendeoptik
- 25: Strahlenbündel
- 30: Lichtempfänger
- 32: Empfangsoptik
- 40: Empfangselement
- 42: innerer Bereich
- 44: äußerer Bereich
- 45: lichtempfindliches Element
- 46: lichtempfindliches Element
- 47: lichtempfindliches Element
- 48: lichtempfindliches Element
- 49: lichtempfindliches Element
- 50: Lichtgitteranordnung

## Patentansprüche

1. Opto-elektronische Sensoranordnung (10) mit wenigstens einem Lichtsender (20) und wenigstens einem Lichtempfänger (30) mit einem ortsauflösenden Empfangselement (40), wobei das Empfangselement (40) einen inneren Bereich (42) mit wenigstens einem lichtempfindlichen Element (45) zur Detektion des vom Lichtsender (20) ausgesandten Strahlenbündels (25) und einen äußeren Bereich (44) mit wenigstens einem lichtempfindlichen Element (46, 47, 48, 49) zur Überprüfung der Position des Strahlenbündels (25) aufweist
**dadurch gekennzeichnet, dass** der äußere Bereich (44) geringeren Empfindlichkeits- und/oder Bandbreitenanforderungen genügt als der innere Bereich (42)
und weiter **dadurch gekennzeichnet, dass** der äußere Bereich (44) eine geringere Ansprechgeschwinder äußere Bereich (44) eine geringere Ansprechgeschwindigkeit aufweist als der innere Bereich (42)
und/oder
der äußere Bereich (44) ein geringere Lichtempfindlichkeit aufweist als der innere Bereich (42).

2. Opto-elektronische Sensorahördnung nach einem der vorhergehenden Ansprüche,
**dadurch gekennzeichnet, dass** der innere Bereich (42) aus genau einem lichtempfindlichen Element (45) und der äußere Bereich (44) aus mehreren, um den inneren Bereich (42) angeordneten lichtempfindlichen Elementen (46, 47, 48, 49) gebildet ist.

3. Opto-elektronische Sensoranordnung nach einem der vorhergehenden Ansprüche,
**dadurch gekennzeichnet, dass** der Durchmesser (d1) des äußeren Bereichs (44) um weniger als 20% des Durchmessers (d2) des inneren Bereichs (42) größer ist als der Durchmesser (d2) des inneren Bereichs (42).

4. Opto-elektronische Sensoranordnung nach einem der vorhergehenden Ansprüche,
**dadurch gekennzeichnet, dass** der Durchmesser (d2) des inneren Bereichs (42) um soviel größer ist als der Durchmesseer (d3) des Lichtflecks des auf das Empfangselement (40) einfallenden Strahlenbündels (25), dass bei einer Verschwenkung des Lichtsenders um maximal 2,5° gegen seine optische Achse der Lichtfleck des auf das Empfangselement (40) einfallenden Strahlenbündels (25) noch vollständig auf den inneren Bereiche (42) abgebildet wird.

5. Opto-elektronische Sensorahordnung nach einem der vorhergehenden Ansprüche,
**dadurch gekennzeichnet, dass** das Empfangselement (40) aus einer Matrixanordnung von lichtempfindlichen Elementen gebildet ist.

6. Opto-elektronische Sensoranordnung nach einem der vorhergehenden Ansprüche,
**dadurch gekennzeichnet, dass** der innere Bereich (42) des Empfangselements (40) aus einem kreisscheibenförmigen lichtempfindlichen Element (45) und der äußere Bereich (44) des Empfangselements (40) aus um das kreisscheibenförmige lichtempfindliche Element (45) angeordneten kreisringsgmentförmigen lichtempfindlichen Elementen (46, 47, 48, 49) gebildet ist.

7. Opto-elektronische Sensdranördnung nach Anspruch 6,
**dadurch gekennzeichnet, dass** der äußere Bereich (44) durch vier kreisringsegmentförmige lichtempfindliche Elemente (46, 47, 48, 49) gebildet ist.

8. Opto-elektronische Sensoranordnung nach einem der Ansprüche 1 bis 7,
**dadurch gekennzeichnet, dass** die lichtempfindlichen Elemente (46, 47, 48, 49) als Photodioden-Array ausgebildet sind.

9. Opto-elektronische Sensoranordnung nach einem der Ansprüche 1 bis 7,
**dadurch gekennzeichnet, dass** die lichtempfindlichen Elementen (46, 47, 48, 49) Bereiche eines als positionsempfineliecher Detektor ausgebildeten Empfangselements (40) sind.

10. Opto-elektronische Sensoranordnung nach einem der vorhergehenden Ansprüche,
**dadurch gekennzeichnet, dass** jedes lichtempfindliche Element (45, 46, 47, 48, 49) separat auswertbare Signale erzeugt.

11. Opto-elektronische Sensoranordnung nach Anspruch 10,
**dadurch gekennzeichnet, dass** zur Bestimmung der Position des Strahlenbündels (25) Mittel vorgesehen sind, welche die Verhältnisse der einzelnen von den lichtempfindlichen Elementen (45, 46, 47, 48, 49) erzeugten Signale bilden.

12. Opto-elektronische Sensoranordnung nach Anspruch 10 oder
**dadurch gekennzeichnet, dass** Mittel vorgesehen sind, welche die von den einzelnen lichtempfindlichen Elementen (45, 46, 47, 48, 49) erzeugten Signale auswerten und zur Ausrichtung von Empfangsoptik (32) und Empfangselement (40) bei der Montage des Lichtempfängers (30) verwenden.

13. Opto-elektronische Sensoranordnung nach einem der vorhergehenden Ansprüche,
**dadurch gekennzeichnet, dass** mehrere Lichtsender (20) und mehrere Lichtempfänger (30) als Lichtgitteranordnung (50) vorgesehen sind.

## Claims

1. An opto-electronic sensor arrangement (10) with at least one light transmitter (20) and at least one light receiver (30) with a spatially resolving receiving element (40), wherein the receiving element (40) has an inner region (42) with at least one light-sensitive element (45) for detecting the bundle of rays (25) emitted by the light transmitter (20) and an outer region (44) with at least one light-sensitive element (46, 47, 48, 49) for checking the position of the bundle of rays (25), **characterized in that** the outer region (44) meets lower sensitivity and/or band width requirements than the inner region (42) and further **characterized in that** the outer region (44) has a lower response speed than the inner region (42) and/or the outer region (44) has a lower light sensitivity than the inner region (42).

2. An opto-electronic sensor arrangement according to one of the preceding claims [sic], **characterized in that** the inner region (42) is formed from precisely one light-sensitive element (45) and the outer region (44) is formed from a plurality of light-sensitive elements (46, 47, 48, 49) arranged around the inner region (42).

3. An opto-electronic sensor arrangement according to one of the preceding claims, **characterized in that** the diameter (d1) of the outer region (44) is larger than the diameter (d2) of the inner region (42) by less than 20 % of the diameter (d2) of the inner region (42).

4. An opto-electronic sensor arrangement according to any one of the preceding claims, **characterized in that** the diameter (d2) of the inner region (42) is so much larger than the diameter (d3) of the light spot of the bundle of rays (25) striking the receiving element (40) that if the light transmitter is pivoted by a maximum of 2.5° with respect to its optical axis the light spot of the bundle of rays (25) striking the receiving element (40) is still imaged completely onto the inner regions (42).

5. An opto-electronic sensor arrangement according to any one of the preceding claims, **characterized in that** the receiving element (40) is formed from a matrix arrangement of light-sensitive elements.

6. An opto-electronic sensor arrangement according to any one of the preceding claims, **characterized in that** the inner region (42) of the receiving element (40) is formed from a light-sensitive element (45) in the form of a circular disc and the outer region (44) of the receiving element (40) is formed from light-sensitive elements (46, 47, 48, 49) in the form of annular segments arranged around the light-sensitive element (45) in the form of a circular disc.

7. An opto-electronic sensor arrangement according to claim 6, **characterized in that** the outer region (44) is formed by four light-sensitive elements (46, 47, 48, 49) in the form of annular segments.

8. An opto-electronic sensor arrangement according to any one of claims 1 to 7, **characterized in that** the light-sensitive elements (46, 47, 48, 49) are designed in the form of an array of photo-diodes.

9. An opto-electronic sensor arrangement according to any one of claims 1 to 7, **characterized in that** the light-sensitive elements (46, 47, 48, 49) are regions of a receiving element (40) designed in the form of a position-sensitive detector.

10. An opto-electronic sensor arrangement according to any one of the preceding claims, **characterized in that** each light-sensitive element (45, 46, 47, 48, 49) produces signals capable of being evaluated separately.

11. An opto-electronic sensor arrangement according to claim 10, **characterized in that** means which form the ratios of the individual signals generated by the light-sensitive elements (45, 46, 47, 48, 49) are provided in order to determine the position of the bundle of rays (25).

12. An opto-electronic sensor arrangement according to claim 10 or 11, **characterized in that** means are provided which evaluate the signals generated by the individual light-sensitive elements (45, 46, 47, 48, 49) and use them to orientate the optical receiving system (32) and the receiving element (40) during the assembly of the light receiver (30).

13. An opto-electronic sensor arrangement according to any one of the preceding claims, **characterized in that** a plurality of light transmitters (20) and a plurality of light receivers (30) are provided as a light grid arrangement (50).

## Revendications

1. Dispositif de capteur optoélectronique (10) ayant au moins un photoémetteur (20) et au moins un photorécepteur (30) avec un élément de réception (40) à résolution de localisation,
* l'élément de réception (40) ayant une zone intérieure (42) avec au moins un élément photosensible (45) pour détecter le faisceau lumineux (25) émis par le photoémetteur (20) et une zone extérieure (44) avec au moins un élément photosensible (46, 47, 48, 49) pour contrôler la position du faisceau lumineux (25),
dispositif **caractérisé en ce que**
pour la zone extérieure (44), les exigences de sensibilité et/ou de largeur de bande sont inférieures à celles pour la zone intérieure (42), et
**caractérisé en outre en ce que**
- la zone extérieure (44) a une vitesse de réponse inférieure à celle de la zone intérieure (42), et/ou
- la zone extérieure (44) a une photosensibilité inférieure à celle de la zone intérieure (42).

2. Dispositif de capteur optoélectronique selon la revendication 1,
**caractérisé en ce que**
la zone intérieure (42) est précisément réalisée par un unique élément photosensible (45) et la zone extérieure (44) est réalisée avec plusieurs éléments photosensibles (46, 47, 48, 49) installés autour de la zone intérieure (42).

3. Dispositif de capteur optoélectronique selon l'une des revendications précédentes,
**caractérisé en ce que**
le diamètre (d1) de la zone extérieure (44) est supérieur au diamètre (d2) de la zone intérieure (42) de moins de 20 % du diamètre (d2) de la zone intérieure (42).

4. Dispositif de capteur optoélectronique selon l'une des revendications précédentes,
**caractérisé en ce que**
le diamètre (d2) de la zone intérieure (42) est suffisamment plus grand que le diamètre (d3) de la tache lumineuse du faisceau lumineux (25) incident tombant sur l'élément de réception (40) pour qu'en cas de basculement du photocapteur d'un maximum de 2,5° par rapport à son axe optique, la tache lumineuse du faisceau lumineux (25) tombant sur l'élément de réception (40) se trouve encore complètement sur la zone intérieure (42).

5. Dispositif de capteur optoélectronique selon l'une des revendications précédentes,
**caractérisé en ce que**
l'élément récepteur (40) est formé d'une répartition en matrice d'éléments photosensibles.

6. Dispositif de capteur optoélectronique selon l'une des revendications précédentes,
**caractérisé en ce que**
la zone intérieure (42) de l'élément de réception (40) est formée d'un élément photosensible (45) en forme de disque et la zone extérieure (44) de l'élément photosensible (40) est formée par des éléments photosensibles (46, 47, 48, 49) en forme de segments d'anneau de cercle installés autour de l'élément photosensible (45) en forme de disque circulaire.

7. Dispositif de capteur optoélectronique selon la revendication 6,
**caractérisé en ce que**
la zone extérieure (44) est formée par quatre éléments photosensibles (46, 47, 48, 49) en forme de segments d'anneau de cercle.

8. Dispositif de capteur optoélectronique selon l'une des revendications 1 à 7,
**caractérisé en ce que**
les éléments photosensibles (46, 47, 48, 49) sont constitués par un réseau de photodiodes.

9. Dispositif de capteur optoélectronique selon l'une des revendications 1 à 7,
**caractérisé en ce que**
les éléments photosensibles (46, 47, 48, 49) sont des zones d'un élément de réception (40) réalisées comme détecteurs sensibles à la position.

10. Dispositif de capteur optoélectronique selon l'une des revendications précédentes,
**caractérisé en ce que**
chaque élément photosensible (45, 46, 47, 48, 49) génère des signaux exploitables séparément.

11. Dispositif de capteur optoélectronique selon la revendication 10,
**caractérisé en ce que**
pour déterminer la position du faisceau lumineux (25), des moyens sont prévus pour former le rapport entre les différents signaux générés par les éléments photosensibles (45, 46, 47, 48, 49).

12. Dispositif de capteur optoélectronique selon la revendication 10 ou 11,
**caractérisé en ce que**
des moyens sont prévus qui exploitent les signaux générés par les différents éléments photosensibles (45, 46, 47, 48, 49) et servent à aligner l'optique de réception (32) et l'élément de réception (40) au montage du photorécepteur (30).

13. Dispositif de capteur optoélectronique selon l'une des revendications précédentes,
**caractérisé par**
plusieurs photoémetteurs (20) et plusieurs photorécepteurs (30) prévus comme dispositif formant une barrière lumineuse (50).
